# EUROPÄISCHE PATENTANMELDUNG

(11) **EP 1 749 428 A1**
(43) Veröffentlichungstag der Anmeldung: **07.02.2007**
(21) Anmeldenummer: 06016053.8
(22) Anmeldetag: 02.08.2006
(51) Int. Cl.: A01C 7/04, A01C 7/10

(54) **Vorrichtung zum Abstreifen von überschüssigen Samenkörnern**

(30) Priorität: 06.08.2005 DE 102005037197
(71) Anmelder: Amazonen-Werke H. Dreyer GmbH & Co. KG, 49205 Hasbergen (DE)
(72) Erfinder: Johannaber, Stefan Jan, 49536 Lienen (DE)

(57) **Zusammenfassung**

Vorrichtung zum Abstreifen von überschüssigen Samenkörnern von den in einem rotierenden Vereinzelungsorgan, wie Trommel oder Scheibe angebrachten und mit einem Druckunterschied beaufschlagten Aussaatöffnungen einer Einzelkornsämaschine, wobei die Aussaatöffnungen in zumindest einer Reihe angeordnet sind, wobei jeder Reihe von Aussaatöffnungen zumindest ein an der Trommel oder Scheibe im Bereich der Aussaatöffnungen zumindest teilweise anliegendes Abstreiferelement zugeordnet ist, wobei den Abstreiferelementen zumindest ein vorzugsweise motorisch betätigtes Einstellmittel zugeordnet ist, welches von einer elektronischen Einrichtung, beispielsweise einem Bordrechner Einstellimpulse erhält. Um eine einfache automatische Einstellung des Abstreiferelementes zu erreichen, ist vorgesehen, dass das Abstreiferelement (6) in Abhängigkeit der Drehzahl des Vereinzelungsorgans (4) und/oder der Vereinzelungsfrequenz von dem Einstellmittel aufgrund der von der elektronischen Einrichtung (9) übermittelten Einstellimpulse einstellbar ist.

## Beschreibung

Die Erfindung betrifft eine Vorrichtung zum Abstreifen von überschüssigen Samenkörnern gemäß des Oberbegriffes des Patentanspruches 1.

Eine derartige Vorrichtung ist beispielsweise durch die DE 198 45 860 A1 bekannt. Bei dieser Vorrichtung werden von einem im Bereich der Vereinzelungsscheibe angeordneten Sensor Impulse an eine elektronische Überwachungseinrichtung übermittelt. In der elektronischen Überwachungseinrichtung ist ein Auswerteprogramm abgespeichert, welches einen abschnittsweise auswertenden Kalibriermodus zur Ermittlung der Vereinzelungsqualität des Vereinzelungsorgans aufweist. Anhand der ermittelten Vereinzelungsqualität wird dann über ein motorisches Einstellelement das Abstreiferelement entsprechend eingestellt. Das Auswerteprogramm mit dem einen abschnittsweise auswertenden Kalibriermodus ist relativ aufwendig.

Der Erfindung liegt die Aufgabe zugrunde, eine einfache automatische Einstellung des Abstreiferelementes zu erreichen.

Diese Aufgabe wird erfindungsgemäß durch das kennzeichnende Merkmal des Patentanspruches 1 gelöst. Infolge dieser Maßnahmen wird in einfacher Weise in Abhängigkeit der Drehzahl des Vereinzelungsorgans das Abstreiferelement eingestellt.

Die Zur Einstellung des Abstreiferelementes erforderlichen Parameter lassen sich in einfacher Weise dadurch ermitteln, dass zumindest ein Sensor zur Ermittlung der Drehzahl und/oder der Vereinzelungsfrequenz des Vereinzelungsorgans vorgesehen ist, dass der Sensor die Daten über die Drehzahl und/oder die Vereinzelungsfrequenz an die elektronische Einrichtung übermittelt.

Versuche haben gezeigt, dass sich eine vorteilhafte Einstellung des Abstreiferelementes zur Erreichung der gewünschten Vereinzelungsqualität dadurch erreichen lässt, dass über die Einstellmittel die Abstreiferelemente aufgrund der ermittelten aktuellen Drehzahl und/oder Vereinzelungsfrequenz bei niedriger Drehzahl und/oder Vereinzelungsfrequenz dichter an die Aussaatöffnungen und bei höherer Drehzahl und/oder Vereinzelungsfrequenz entfernter von den Aussaatöffnungen eingestellt werden.

Eine automatische Einstellung der Abstreiferelemente über die Einstellelemente lässt sich dadurch erreichen, dass in dem Speicher der elektronischen Einrichtung die Einstelldaten für die Abstreiferelemente in Abhängigkeit von der Drehzahl des Vereinzelungsorgans und/oder der Vereinzelungsfrequenz hinterlegt sind, und dass aufgrund dieser hinterlegten Zusammenhänge über die elektronische Einstelleinrichtung mittels der Einstellmittel die Abstreiferelemente einstellbar sind.

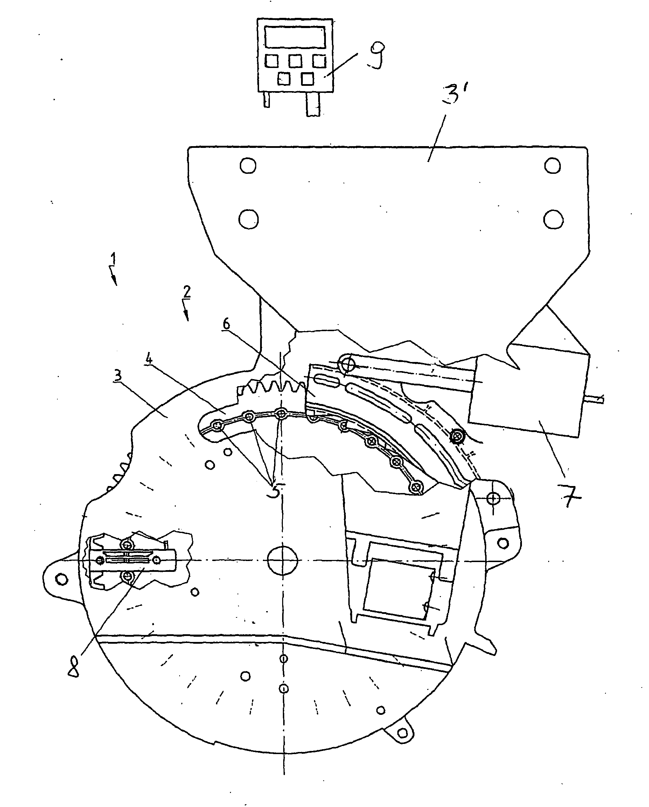

Weitere Einzelheiten der Erfindung sind den übrigen Unteransprüchen, der Beispielsbeschreibung und der Zeichnung zu entnehmen. Die Zeichnung zeigt
ein Vereinzelungsaggregat einer Einzelkornsämaschine in der Seitenansicht, im Teilschnitt und in Teildarstellung.

Am Rahmen einer Einzelkornsämaschine sind in bekannter und daher nicht dargestellter Weise beabstandet zueinander die Einzelkornsäaggregate 1 mit einem Vereinzelungsorgan 2 angeordnet. Das Vereinzelungsorgan 2 weist das Gehäuse 3 auf, in welchem die Vereinzelungsscheibe 4 drehbar gelagert ist. Das Gehäuse 3 mündet in einem Vorratsbehälter 3' zur Aufnahme des auszubringenden Saatgutes. Die Vereinzelungsscheibe 4 wird von einem Antrieb in bekannter und daher nicht näher dargestellter Weise angetrieben. Die Vereinzelungsscheibe 4 weist Aussaatöffnungen 5 auf, die mit einem Druckunterschied beaufschlagt werden. Den einer Reihe zugeordneten Aussaatöffnungen 5 der Scheiben 4 ist ein im Bereich der Aussaatöffnungen 5 zumindest teilweise anliegendes Abstreiferelement 6 angeordnet, welches von einem motorisch betätigten Einstellmittel 7, welches als elektrischer Stellmotor ausgebildet ist, einstellbar. Mittels dieses Einstellelementes 7 kann das Abstreiferelement 6 relativ zu den Aussaatöffnungen 5 eingestellt werden. Jeder Vereinzelungsscheibe 4 bzw. Vereinzelungsreihe von Aussaatöffnungen ist ein Sensor 8 zur Erfassung der vereinzelten Saatkörner zugeordnet.

Des Weiteren ist eine elektronische Einrichtung, die als Bordrechner 9 ausgebildet ist vorgesehen. Der Bordrechner 9 ist mit dem elektrischen Einstellmotor 7 verbunden, so dass der Bordrechner 9 entsprechende Einstellimpulse an den Elektromotor 7 übermitteln kann.

In dem Speicher des Bordrechners 9 sind Einstelldaten für das Abstreiferelement 6 in Abhängigkeit von der Drehzahl des als Scheibe 4 ausgebildeten Vereinzelungsorgans und/oder der Vereinzelungsfrequenz hinterlegt. Diese Zusammenhänge sind durch imperische Untersuchungen ermittelt worden. Aufgrund dieser hinterlegten Zusammenhänge werden über entsprechend von dem Bordrechner 9 übermittelte Einstellimpulse an den elektrischen Stellmotor 7 die Abstreiferelemente 6 eingestellt. Hierbei können auch zusätzlich in den Speicher des Bordrechners 9 die Zusammenhänge zwischen Saatgutsorte und Abstreiferstellung in dem Speicher hinterlegt sein.

Aufgrund der in dem Speicher des Bordrechners 9 hinterlegten Zusammenhänge werden die Einstellelemente 7 derart angesteuert, dass über die elektrische Stellmotore 7 die Abstreiferelemente 6 aufgrund der ermittelten aktuellen Drehzahl und/oder Vereinzelungsfrequenz bei niedriger Drehzahl und/oder bei niedriger Vereinzelungsfrequenz dichter an die Aussaatöffnungen 5 und bei höherer Drehzahl und/oder höher Vereinzelungsfrequenz weit entfernt von den Aussaatöffnungen eingestellt werden.

Hierzu ist ein Sensor im Bereich des Vereinzelungsorgans 4 oder in dessen Antrieb angeordnet, um die Drehzahl der Scheibe 4 oder die Vereinzelungsfrequenz, wobei die Vereinzelungsfrequenz auch über den Sensor 8, der die vereinzelten Saatkörner abtastet ermittelt werden kann. Diese Daten über die Drehzahl oder die Vereinzelungsfrequenz werden an den Bordcomputer übermittelt.

Somit wird das Abstreiferelement 6 in Abhängigkeit von der Drehzahl des Vereinzelungsorgans 4 und/oder der Vereinzelungsfrequenz von dem elektronischen Einstellmotor 7 aufgrund der von dem Bordrechner 9 Einstellimpulse eingestellt.

## Patentansprüche

1. Vorrichtung zum Abstreifen von überschüssigen Samenkörnern von den in einem rotierenden Vereinzelungsorgan , wie Trommel oder Scheibe angebrachten und mit einem Druckunterschied beaufschlagten Aussaatöffnungen einer Einzelkornsämaschine, wobei die Aussaatöffnungen in zumindest einer Reihe angeordnet sind, wobei jeder Reihe von Aussaatöffnungen zumindest ein an der Trommel oder Scheibe im Bereich der Aussaatöffnungen zumindest teilweise anliegendes Abstreiferelement zugeordnet ist, wobei den Abstreiferelementen zumindest ein vorzugsweise motorisch betätigtes Einstellmittel zugeordnet ist, welches von einer elektronischen Einrichtung, beispielsweise einem Bordrechner Einstellimpulse erhält, **dadurch gekennzeichnet, dass** das Abstreiferelement (6) in Abhängigkeit der Drehzahl des Vereinzelungsorgans (4) und/oder der Vereinzelungsfrequenz von dem Einstellmittel (7) aufgrund der von der elektronischen Einrichtung (9) übermittelten Einstellimpulse einstellbar ist.

2. Vorrichtung nach Anspruch 1, **dadurch gekennzeichnet, dass** zumindest ein Sensor zur Ermittlung der Drehzahl und/oder der Vereinzelungsfrequenz des Vereinzelungsorgans (4) vorgesehen ist, dass der Sensor die Daten über die Drehzahl und/oder die Vereinzelungsfrequenz an die elektronische Einrichtung (9) übermittelt.

3. Vorrichtung nach einem oder mehreren der vorstehenden Ansprüche, **dadurch gekennzeichnet, dass** über die Einstellmittel die Abstreiferelemente (6) aufgrund der ermittelten aktuellen Drehzahl und/oder Vereinzelungsfrequenz bei niedriger Drehzahl und/oder Vereinzelungsfrequenz dichter an die Aussaatöffnungen (5) und bei höherer Drehzahl und/oder Vereinzelungsfrequenz entfernter von den Aussaatöffnungen (5) eingestellt werden.

4. Vorrichtung nach einem oder mehreren der vorstehenden Ansprüche, **dadurch gekennzeichnet, dass** in dem Speicher der elektronischen Einrichtung (9) die Einstelldaten für die Abstreiferelemente (6) in Abhängigkeit von der Drehzahl des Vereinzelungsorgans (4) und/oder der Vereinzelungsfrequenz hinterlegt sind, und dass aufgrund dieser hinterlegten Zusammenhänge über die elektronische Einstelleinrichtung (9) mittels der Einstellmittel (7) die Abstreiferelemente (6) einstellbar sind.

5. Vorrichtung nach Anspruch 4, **dadurch gekennzeichnet, dass** zusätzlich die Zusammenhänge zwischen Saatgutsorte und Abstreiferstellung in dem Speicher der elektronischen Einstelleinrichtung (9) hinterlegt sind.
